# EUROPEAN PATENT APPLICATION

(11) **EP 1 927 832 A1**
(43) Date of publication of application: **04.06.2008**
(21) Application number: 07121655.0
(22) Date of filing: 27.11.2007
(51) Int. Cl.: G01K 1/16, F04B 43/04

(54) **Apparatus and method for reducing uncertainty of sensor measurements in still gases**

(30) Priority: 30.11.2006 US 565217
(71) Applicant: General Electric Company, Schenectady, NY 12345 (US)
(72) Inventor: Brown, Roderick Gordon, Mapperley Park, Nottinghamshire NG3 5EN (GB)
(74) Representative: Illingworth-Law, William Illingworth

(57) **Abstract**

A sensing device (10) for increasing sensor accuracy in stagnant air or gas environments has a piezoelectric air mover (20) positioned proximate a sensing element (40,45). The piezoelectric air mover blows or draws air or gas from the environment across the sensing element to eliminate the stagnant gas condition and thereby increase the speed and accuracy of measurements with the sensing element.

## Description

### Background of the Invention

The field of the invention relates to sensing devices, and more particularly, to a device and method for increasing the accuracy of measurements obtained with sensing devices in slow moving or still gas environments.

Sensing devices for measuring temperature, humidity or other gas parameters are generally known in the field, such as a wall thermostat or automobile cabin sensor. These devices have poor contact between the sensor element inside an enclosure and the gas or air outside the enclosure. Such conventional sensor devices usually rely on convection and diffusion caused by gradients in temperature, moisture or whatever the measured value is to cause movement of the gas molecules and convey the quantity to be measured through vents in the enclosure and to the sensor element. These gradients introduce errors into the measurement and make the sensor slow to respond to the ambient changes it is supposed to be measuring.

Gas has been drawn across sensors using conventional fans and pumps having rotating parts. However, these conventional gas movers are difficult to miniaturize and as a result many potential applications cannot be accessed using rotary fan technology. Further rotary fans and pumps are relatively expensive compared to the associated sensors. Power management for fans and pumps used in these applications is also a problem which is difficult to resolve, adding to the miniaturization and portability problem.

Sensors used for thermostats and automotive climate control are inaccurate when the surrounding gas is stagnant or still, and there are no cost-efficient, sufficiently small fans or air movers known. Accordingly, a need exists for an air mover that is sized relative to a sensor to push or draw a sensed gas across the sensor for a wide range of applications including portable, battery powered miniaturized products.

### Brief Description of the Invention

A sensing apparatus according to one embodiment of the invention includes a piezoelectric air mover oriented to draw or blow a gas for sensing across a sensor element used to sense a particular gas parameter. The piezoelectric air mover advantageously uses relatively little power to produce sufficient flow to the air or gas being measured by the sensor element to increase the accuracy of the measurements.

In another embodiment, a duct is provided containing at least one sensor and a piezoelectric air mover. The piezoelectric air mover is adapted to generate a flow of air or gas environment through the duct by rapid vibration of the piezoelectric element within the duct. The air or gas is caused to move across the sensor so that inaccuracy due to stagnant conditions is eliminated.

In a further alternative embodiment of the invention, a piezoelectric bellows is formed by two opposed plates of piezoelectric elements supported on a housing. A vent in the housing permits air or other gas to be drawn in and expelled as a result of the piezoelectric element vibration bellows movement. A sensor is mounted inside the bellows for detecting characteristics of the moving gas.

In a still further embodiment of the invention, a sensing device includes a piezoelectric element with a vane attached. The vane is mounted to the piezoelectric element in a way that causes the vane to oscillate in response to the piezoelectric element vibration. A sensor is mounted to the vane in a manner which results in air or gas movement over the sensor when the piezoelectric element causes the vane to move.

The various features of novelty which characterize the invention are pointed out with particularity in the claims annexed to and forming a part of this disclosure. For a better understanding of the invention, its operating advantages and benefits obtained by its uses, reference is made to the accompanying drawings and descriptive matter. The accompanying drawings are intended to show examples of the many forms of the invention. The drawings are not intended as showing the limits of all of the ways the invention can be made and used. Changes to and substitutions of the various components of the invention can of course be made. The invention resides as well in sub-combinations and sub-systems of the elements described, and in methods of using them.

### Brief Description of the Drawings

Fig. 1 is a schematic drawing of a sensing device incorporating an air mover in accordance with one embodiment of the invention;

Fig. 2a is a top view of a sensing device in accordance with a further embodiment of the invention;

Fig. 2b is a sectional side elevation view of a the sensing device of Fig. 2a taken along line A-A;

Fig. 3a is a side elevation view of a still further embodiment of a sensing device in accordance with the invention; and

Fig. 3b is a top plan view of the device of Fig. 3a.

### Detailed Description of the Invention

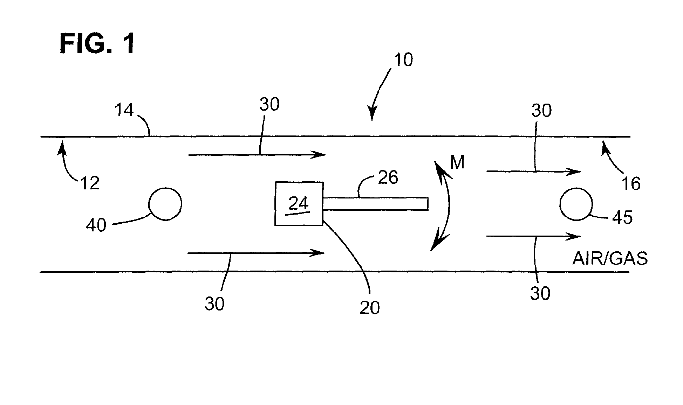

Referring now to the drawings in which like reference numerals are used to indicate the same or related elements, Fig. 1 illustrates a duct 14 of a sensing device 10 having inlet 12 and outlet 16. A piezoelectric element 20 is mounted inside the duct 14. Piezoelectric air mover 20 includes piezoelectric actuator 24 and vane 26. Vane 26 is attached to piezoelectric actuator 24 in a manner such that vibration or oscillation of the piezoelectric actuator 24 causes oscillating movement of the vane 26 in the directions shown by arrow M. The oscillating movement of the vane 26 in turn causes the ambient gas or air to flow 30 in the tube 14 to be in the direction of the arrows. The piezoelectric actuator 24 and vane 26 may be made of conventional piezoelectric materials and MEMS materials, such as silicon, quartz and other compatible materials. Vane 26 should be selected from a material which is movable in response to the piezoelectric actuator 24 motion, while being sufficiently rigid to cause the surrounding gas 30 to flow in response to the motion of the vane 26.

Piezoelectric air mover 20 is connected to a power source (not shown) which is preferably located outside the duct 14, so as to reduce the disturbances to flow within the duct 14, but a power source or portion thereof may be mounted within the duct 14 as well. The power source for the air mover 20 may be a portable source, such as a battery, or a fixed source, such as a residential power circuit. The power source provides the energy needed to cause the piezoelectric elements of the piezoelectric air mover 20 to oscillate. Power management may be effected by switching the piezoelectric air mover 20 on and off to coincide with readings from sensing elements 40, 45. The piezoelectric air mover 20 can be powered shortly before a sensor reading is obtained to generate gas flow 30, and powered off after sufficient gas flow 30 is generated to provide a good sensor reading.

The piezoelectric actuator 24 and vane 26 illustrated in Fig. 1 create a unidirectional gas flow through a suitably designed duct 14. Sensor elements 40, 45 are positioned in the duct 14 within the gas flow 30 generated when the air mover 20 is operating. As shown in Fig. 1, the sensor elements 40, 45 can be positioned in proximity to either the inlet 12 or outlet 16. Further, depending on the application, the sensing device 10 can include only one or both sensor elements 40, 45, or additional sensor elements 40. As will be appreciated, the ability of moving gas or air to transmit a condition or characteristic to one or more sensors is many times greater than that of a stagnant or still gas. Accordingly, use of the sensing device 10 more closely couples the ambient gas or air being sensed to the sensing elements 40, 45, thereby reducing measurement errors and sensor response time.

Embodiments including an inlet-mounted sensor 40 are preferred for providing higher accuracy readings, since if there are any changes to air condition produced by the piezoelectric air mover 20 itself these will not be detected by the sensors 40 when sensors 40 are positioned at the inlet 12. However, sensors 45 mounted between the air mover 20 and outlet 16 still provide improved performance and higher accuracy relative to sensors operating in stagnant or still air conditions. The piezoelectric air mover 20 is configured and operated so as to give an adequate, but not excessive, gas flow 30 through duct 14. Modest flow rates save power and reduces the ingress of dust which may accumulate in the duct over time. Where power is a primary concern the air mover 30 may be switched off between measurements and powered back up a suitable time in advance of the next measurement.

Other types of piezoelectric air mover 20 produce a bi-directional, or reciprocating flow 30, moving the gas rapidly back and forth. Such movers can be used with advantage of reducing build up of dust etc. in the measuring area.

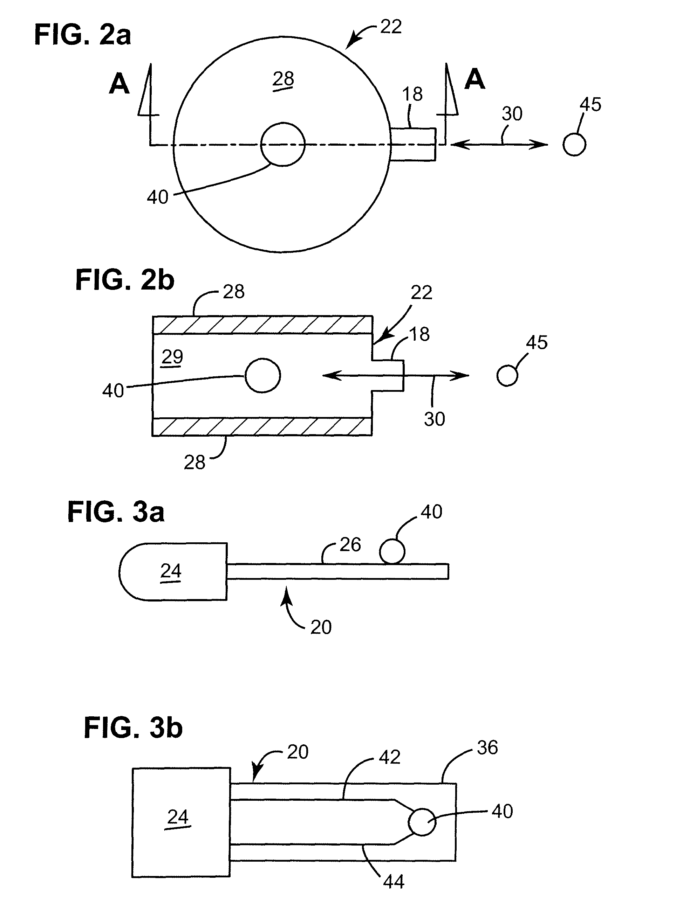

Figs. 2a and 2b illustrate one such piezoelectric air mover 20 in the form of a bellows 22. Piezoelectric plates 28 on the top and bottom of the bellows 22 are connected by a wall 29 to form a bellows chamber. An outlet 18 is provided in the wall of the bellows chamber. The piezoelectric plates 28 are energized to cause the plates 28 to oscillate. The oscillation of the plates 28 in turn operates the bellows 22 to blow and draw ambient gas in and out of outlet 18. In this instance the sensor(s) 40, 45 can be placed in proximity to the outlet 18 of the bellows 22 in the path of reciprocating gas flow 30 generated by the piezoelectric air mover 20. Sensors 40, 45 may be located within the bellows 22 chamber (sensor 40), or externally (sensor 45) within the path of gas flow 30, or both sensors 40, 45 may be used together.

In a further embodiment of the piezoelectric air mover 20, the piezoelectric air mover can be constructed in the form of a pump. In such case, the outlet 18 of bellows 22 includes a one way valve (not shown) which enables higher pressures to be generated than a rotary fan type construction. The use of a piezo-actuated pump is desirable where gas samples must be drawn through tubing or through some other item or construction which offers high resistance to motion such as a filter element.

A still further embodiment of the invention is shown in Figs. 3a and 3b, in which a piezoelectric air mover 20 has a sensor 40 mounted directly to vane 26 of air mover 20. The piezoelectric air mover 20 may optionally be mounted inside a duct 14 as in Fig. 1, but it is not necessary, since sensor 40 is exposed to moving gas by virtue of movement of the vane 26 caused by piezoelectric actuator 24. Leads 42, 44 for sensor 40 may be etched, bonded or applied in another known manner to vane 26 and piezoelectric 24 for connection with a circuit for analyzing (not shown) the sensor 40 readings.

By drawing a sensed air or gas 30 across sensors 40, 45 at some speed, the measurement time delays observed in conventional sensors positioned in stagnant gases are eliminated. The piezoelectric air movers 20 are small, for example, 2.5 cm or less in length and smaller still in other directions. In the case of a bellows or pump type piezoelectric air mover 20, it may be about 2 cm in diameter or less. The piezoelectric air movers 20 have minimal weight and consume less than 30mW of power. Such air movers 20 are ideal for use in a number of applications, including gas measuring equipment, wall mounted temperature and humidity sensors, automotive A/C and heat sensors, environmental monitoring sensors, environmental validation sensors, portable gas or air monitors and many other applications in which gas characteristics are measured, particularly temperature and humidity. The piezoelectric air mover 20 may require power conditioning circuitry to make the mover supply voltage and waveform suitable and to convert battery voltage to the high drive voltage required by piezoelectric actuators 24, 28. It will be appreciated how to implement such power conditioning and power management, depending on the selected application for the piezoelectric air movers 20.

The construction and arrangement of the sensing device, as described herein and shown in the appended figures, is illustrative only. Although only a few embodiments of the invention have been described in detail in this disclosure, those skilled in the art who review this disclosure will readily appreciate that many modifications are possible (e.g. variations in sizes, dimensions, structures, shapes and proportions of the various elements, values of parameters, mounting arrangements, use of materials, orientations, etc.) without materially departing from the novel teachings and advantages of the subject matter recited in the appended claims. Accordingly, all such modifications are intended to be included within the scope of the present invention as defined in the appended claims. The order or sequence of any process or method steps may be varied or re-sequenced according to alternative embodiments. In the claims, any means-plus-function clause is intended to cover the structures described herein as performing the recited function and not only structural equivalents but also equivalent structures. Other substitutions, modifications, changes and omissions may be made in the design, operating conditions and arrangement of the preferred and other exemplary embodiments without departing from the spirit of the embodiments of the invention as expressed in the appended claims. Therefore, the technical scope of the present invention encompasses not only those embodiments described above, but all that fall within the scope of the appended claims.

## Claims

1. A sensing device for use in stagnant ambient air or gas conditions, comprising:
a piezoelectric air mover adapted to create a flow of air or gas; and
at least one sensing element positioned proximate the piezoelectric air mover.

2. The sensing device according to claim 1, wherein the piezoelectric air mover comprises a piezoelectric actuator and a vane connected to the piezoelectric actuator.

3. The sensing device according to claim 2, wherein the at least one sensing element is mounted to the vane.

4. The sensing device according to any one of the preceding claims, further comprising a duct having an inlet and an outlet surrounding the piezoelectric air mover and at least one sensing element.

5. The sensing device according to claim 4, wherein the at least one sensing element is positioned between the inlet and the piezoelectric air mover.

6. The sensing device according to claim 4, wherein the at least one sensing element is positioned between the piezoelectric air mover and the outlet.

7. The sensing device according to any one of the preceding claims, wherein the piezoelectric air mover comprises a bellows having first and second piezoelectric plates opposing each other connected together by a wall to form a bellows chamber and having an outlet in the wall of the bellows chamber.

8. The sensing device according to claim 7, wherein the at least one sensing element is positioned within the piezoelectric air mover.

9. The sensing device according to claim 7, wherein the at least one sensing element is positioned proximate the outlet of the piezoelectric air mover.

10. The sensing device according to any one of the preceding claims, wherein the at least one sensing element is used to measure or detect one of humidity and temperature.

11. A method for increasing accuracy of measurement of a gas parameter in a stagnant gas environment, the method comprising:
providing a piezoelectric air mover;
placing a sensing element in proximity to the piezoelectric air mover;
operating the piezoelectric air mover to generate a flow of gas within the stagnant gas environment; and
obtaining a measurement with the sensing element during a time when operating the piezoelectric air mover creates a flow of gas about the sensing element.

12. The method according to claim 11, further comprising mounting the piezoelectric air mover and sensing element within a duct for channeling the flow of gas.

13. The method according to claim 11 or claim 12, wherein obtaining a measurement comprises obtaining a temperature of the gas in the flow of gas.

14. The method according to any one of claims 11 to 13, wherein obtaining a measurement comprises obtaining a humidity of the gas in the flow of gas.

15. The method according to any one of claims 11 to 14, wherein operating the piezoelectric air mover further comprises activating the piezoelectric air mover prior to obtaining a measurement with the sensing element and deactivating the piezoelectric air mover after the measurement is obtained.
